# EUROPEAN PATENT SPECIFICATION

(11) **EP 0 273 520 B1**
(45) Date of publication and mention of the grant of the patent: **22.09.1993**
(21) Application number: 87202565.5
(22) Date of filing: 16.12.1987
(51) Int. Cl.: C08G 59/18, C08G 59/68, C08G 59/62, C08G 59/42

(54) **A composition comprising a polyepoxide and a epoxy advancement catalyst, and a process for preparing advanced epoxy resins**
Eine Zusammensetzung enthaltend ein Polyepoxyd und ein Katalysator für Epoxydvorverlängerungsverfahren, und ein Verfahren zur Herstellung von vorverlängerten Epoxydharzen
Une composition comprenant un polyepoxyde et un catalyseur pour procédé par prepolymérisation pour résine époxyde, et un procédé pour préparer des résines epoxydes prepolymérisées

(30) Priority: 30.12.1986 US 947723
(43) Date of publication of application: 06.07.1988
(73) Proprietor: SHELL INTERNATIONALE RESEARCH MAATSCHAPPIJ B.V., 2596 HR Den Haag (NL)
(72) Inventor: Jackson, Roy Joseph, Houston Texas 77077 (US); Corley, Larry Steven, Houston Texas 77083 (US)

(56) References cited:
- EP-A- 0 120 462
- EP-A- 0 182 299
- EP-A- 0 209 174
- US-A- 4 438 254
- US-A- 4 732 958
- MAKROMOLECULAR CHEMISTRY, vol. 184, 1983, pages 811-819;Biela, T. et al.: "Kinetic Determination of Stereoselectivity in the Anionic Polymerization of alpha-Ethyl-alpha-phenyl-beta-propiolactone"

## Description

According to the invention, a relatively water-insensitive storable composition is provided comprising a low molecular weight epoxy resin and a bis(trihydrocarbylphosphine)iminium salt. In a specific aspect, the invention relates to a process for reacting, in an epoxy "fusion" reaction, the above composition with a phenolic compound. Epoxy "fusion" reactions are sometimes referred to as epoxy "advanced" reactions.

It is known to prepare epoxy resins by reacting a compound having a vicinal epoxide group, such as epichlorohydrin, with 2,2-bis(4-hydroxyphenol)propane (BPA) in the presence of sodium hydroxide. To prepare linear, high molecular weight epoxy resins, it is common practice to first prepare an epoxy resin having a relatively low epoxy equivalent weight (EEW) and then to react it in the presence of a catalytic amount of a suitable catalyst, with a compound containing phenolic hydroxyl groups. Various catalysts have been employed in such fusion reactions, including phosphonium salts such as those disclosed in US-A-3,477,990 and US-A-4,438,254. In both of these documents are disclosed various classes of phosphonium salt fusion catalyst.

Such phosphonium catalysts are highly active in promoting the epoxy fusion reaction to produce a high molecular weight epoxy resin. It is often desirable to prepare "precatalysed" mixtures of the epoxy resin and the fusion catalyst which have good storage stability even at elevated temperatures. The use of some phosphonium catalysts results in a precatalysed system which has reduced activity upon storage, particularly under elevated temperatures. Some phosphonium catalysts, as discussed in US-A-4,438,254, are very water-sensitive, necessitating the careful control of water in the advancement reaction mixture.

It is therefore an object of the invention to provide new epoxy compositions which are highly active in the fusion reaction and have good storage stability and low sensitivity to water.

The epoxy resin fusion catalyst of the invention can be described by the formula 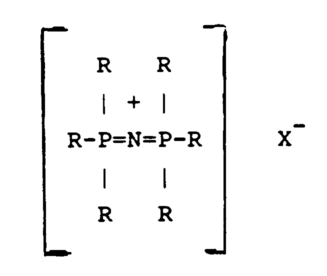
in which each R is selected independently from substituted or unsubstituted hydrocarbyl and X is a compatible anion.

The R groups can be aliphatic or aromatic. The aliphatic R groups will generally fall within the class of C₁-C₁₀ alkyl. Preferably, at least one R group per phosphorus atom is aromatic. The preferred epoxy fusion reaction catalysts, because of their commercial availability are bis(triphenylphosphine)iminium salts.

The compatible anion X can be selected from a wide range of chemical species. Preferred anions are halides, preferably bromide, chloride or iodide; carboxylates, such as formate, acetate, oxalate or trifluoroacetate; conjugate bases of weak inorganic acids, such as bicarbonate, fluoride or dihydrogen phosphate, and conjugate bases of a phenol, such as phenolate or an anion derived from BPA. The most preferred anions are halides, with chloride being the most preferred halide. Pure bis(triphenylphosphine)iminium chloride is commercially available. The preparation of such salts is known in the art, for example, from Inorganic Synthesis, 15, 84-87 (1974).

The above-described bis(trihydrocarbylphosphine)iminium salts may be useful as catalysts of reactions of compounds having a vicinal epoxy group with acidic fusion compounds such as phenols, thiophenols and carboxylic acids. An example of such a reaction is an epoxy fusion process in which a low molecular weight epoxy resin is reacted with one of the above acidic fusion compounds to produce a high molecular weight fusion product. The low molecular weight epoxy resin starting material will preferably be a liquid polyepoxide having an average of more than 1 vicinal epoxy group per molecule and a EEW of less than 500, usually less than 300. Preferred polyepoxides include liquid glycidyl polyethers of polyhydric phenols and polyhydric alcohols. Most preferred are the glycidyl polyethers of BPA having an average molecular weight between 340 and 900 and an EEW (ASTM D-1652) of between 170 and 500. Such liquid epoxy resins are available commercially as, for example, EPIKOTE-828, a liquid epoxy resin having an EEW of 185-192.

The preferred acidic fusion compounds are phenols having at least one hydroxyl group attached to an aromatic nucleus. The phenols can be monohydric or polyhydric and can be substituted or unsubstituted. Examples of suitable phenols include phenol, resorcinol, o-cresol, m-cresol, p-cresol, chlorophenol, nitrophenol, hydroquinone, BPA, 2,2-bis(4-hydroxyphenyl)pentane and the like, and polymeric polyhydric phenols obtained by condensing monohydric or polyhydric phenols with formaldehyde.

Preferred phenols are polyhydric phenols containing from 2 to 6 hydroxyl groups and up to about 30 carbon atoms, including those represented by the formula 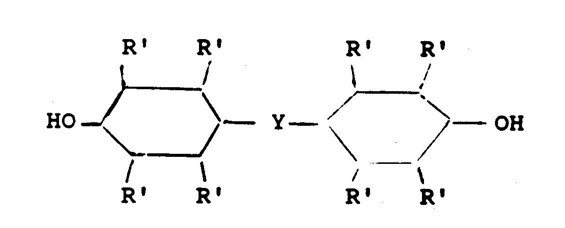
wherein Y is a polyvalent radical and each Rʹ is independently selected from hydrogen, halogen and hydrocarbyl. The preferred radicals represented by Y are oxygen, sulphur, divalent hydrocarbon radicals containing up to about 10 carbon atoms, and oxygen-, silicium-, sulphur-, phosphorus-, and nitrogen-containing hydrocarbon radicals. The preferred phenol is BPA, in which each Rʹ is H and Y is isopropylidene.

The amount of the bis(trihydrocarbylphosphine)iminium salt catalyst used in an epoxy fusion reaction can vary over a wide range, but the catalyst will generally be present in the fusion reaction mixture in an amount of from 0.001 to 8 weight percent, preferably from 0.01 to 2 weight percent based on the weight of the polyepoxide.

The invention further describes a process for preparing an fused epoxy resin having an EEW of at least 500, by contacting the composition comprising the polyepoxide and the catalyst with an acidic fusion compound selected from the group consisting of phenols, thiophenols, and carboxylic acids at a temperature in the range of 100°C to 200°C.

The fusion reaction may be carried out in the presence or absence of solvents or diluents. Generally, the reactants will be liquid and the reaction can be carried out without the addition of solvents or diluents. If it is considered desirable to carry out the reaction in a diluent, an inert hydrocarbon such as xylene, toluene or cyclohexane will generally be chosen.

The fusion reaction is preferably carried out by combining the polyepoxide and acidic fusion compounds at a starting temperature of 100-120 °C and allowing the reaction to exotherm to a temperature of 160-200 °C, conviniently for a time of 1-2 hours. The relative amount of the reactants depends upon the characteristics, particularly the molecular weight, of the product desired. For the preferred high molecular weight phenolic hydroxy ether resin products having an EEW of between 500 and 7,000, 0.4 to 1 mole BPA will be reacted with each mole of a liquid diglycidyl ether of BPA.

The fusion catalyst is relatively water-insensitive. Hence, the fusion reaction can be carried out in the presence or absence of water, depending upon the fusion product desired. Consequently, for epoxy resins containing a small amount of water, say up to 2 percent, there is no need to remove such. Satisfactory product will generally be obtained even when 0.01 weight per cent or more water is present in the reaction mixture. An amount of water of 0.03 to 1.0 weight percent is not unusual in the starting polyepoxide, and the reaction is most conveniently carried out without removal of this water.

When the fusion reaction has proceeded to an advanced epoxy resin fusion product having the desired EEW, generally 500 or greater, deactivation of the catalyst is conveniently carried out by adding, with stirring, the desired amount of an acid or sulfonium salt of an acid containing an anion of low nucleophilicity (HBF₄, CF₃SO₃H, HPF₆ and HSbF₆, for example) to the fusion reaction mixture. The temperature at which deactivation is carried out is not critical, and will generally occur at the temperature of the fusion reaction mixture at the desired point of termination of the fusion reaction, which will generally be 180 °C. Following deactivation of the catalyst, the advanced epoxy resin is recovered and processed by conventional methods.

It will often be advantageous not to deactivate the catalyst, but rather to maintain the bis(trihydrocarbylphosphine)iminium catalyst in the recovered fusion product in an active state. This enables the use of the residual iminium salt to catalyse subsequent chemical processes which employ the fusion product as a starting material. For example, the high molecular weight fusion product containing catalyst can be esterified with a dimer acid, without additional esterification catalyst, to produce a surface coating resin. The use of advanced epoxy resins made employing catalysts which are essentially deactivated during the advancement reaction requires either the addition of an esterification catalyst or a base, such as sodium carbonate, to prevent gelation before a satisfactory low acid number is achieved in the esterified epoxy resin.

The pre-catalysed composition of the invention has long shelf life and good stability in the presence of water. The high molecular weight fusion product is useful for solvent-borne coatings, powder coatings or electrical laminating.

### EXAMPLE

This example reports the results of two tests to determine the storage stability at 129°C of precatalysed compositions. Precatalysed resin samples were prepared from a liquid polyepoxide having an epoxy equivalent weight (EEW) of 185 (EPIKOTE 828, available from Shell Chemical Company) and a catalyst in a concentration of 0.25 meq/100 g resin.

In the first test, the EEW of the aged epoxy resin of the composition containing bis(triphenylphosphine)iminium chloride was determined at various storage times. The results are shown in table 1. A phosphorus NMR recording of the precatalysed sample aged for 34 days was unchanged from that of the unaged sample, further indicating the storage stability of the iminium catalyst.

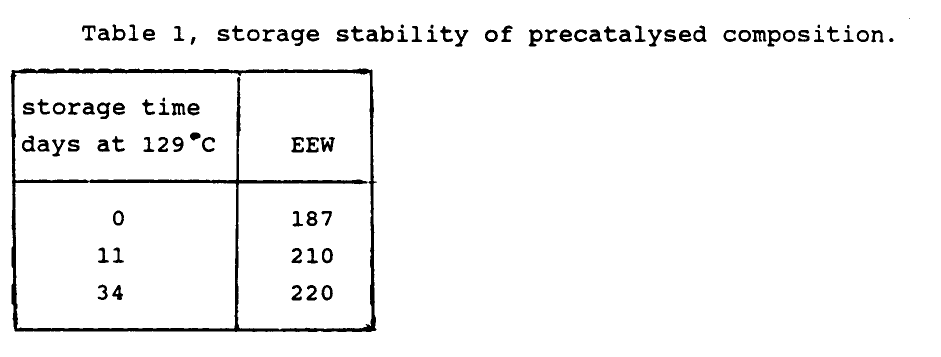

After the indicated storage time, samples of the first test, and samples prepared with a corresponding amount of ethyltriphenylphosphonium iodide catalyst were allowed to react on a small scale to asses the retention of activity of the stored compositions.

10 g precatalysed composition was mixed with sufficient BPA, the acid fusion compound, to give a product having a EEW of 500 at 100% BPA-conversion. The reaction mixtures were held at 160°C for 45 minutes. No effort to remove the water from the reaction mixtures was made. The results shown in table 2, clearly compare well with the theoretical EEW, indicate a good retention of activity for the iminium catalyst comprising composition. The composition prepared with the phosphonium catalyst becomes inactive after one week.

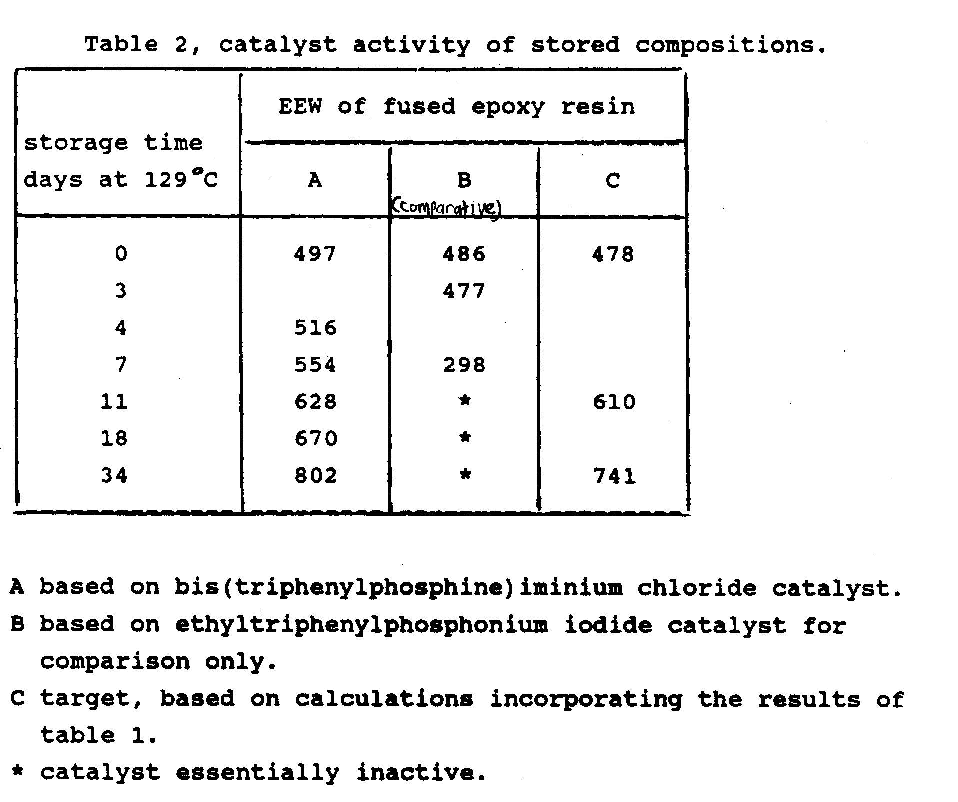

## Claims (Claims for the following Contracting State(s): AT, BE, CH, DE, FR, GB, GR, IT, LI, LU, NL, SE)

1. A composition comprising a polyepoxide having an average of more than 1 vicinal epoxide group per molecule and a weight per epoxide less than 500 and an epoxy fusion catalyst, characterised in that the catalyst is of the formula 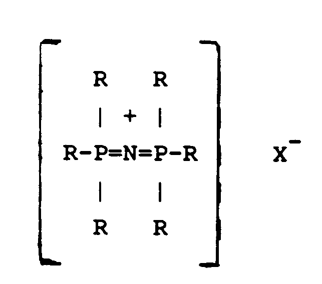 in which each R is selected independently from substituted or unsubstituted hydrocarbyl and X is a compatible anion.

2. The composition as claimed in claim 1, characterised in that the polyepoxide is a diglycidyl ether of 2,2-bis(4-hydroxyphenyl)propane.

3. The composition as claimed in claim 1 or 2, characterised in that the amount of the catalyst employed is between 0.01 and 2% by weight based on the weight of the polyepoxide.

4. The composition as claimed in any of claims 1 to 3, characterised in that the catalyst has at least one phenyl group per phosphorus atom.

5. The composition as claimed in any of claims 1 to 4, characterised in that the catalyst has an halide as anion.

6. The composition as claimed in any of claims 1 to 5, characterised in that the catalyst is bis(triphenylphosphine)iminium chloride.

7. The composition as claimed in any of claims 1 to 6, characterised in that the composition further comprises from 0.03 to 1.0% by weight water, based on the weight of the polyepoxide.

8. A process for preparing a fused epoxy resin having an epoxy equivalent weight of at least 500, by contacting a composition as claimed in any of claims 1 to 7 with an acidic fusion compound selected from the group consisting of phenols, thiophenols, and carboxylic acids at a temperature in the range of 100°C to 200°C.

9. A process as claimed in claim 8, characterised in that the acidic fusion compound is 2,2-bis(4-hydroxyphenyl)propane.

10. A process for preparing an esterified epoxy resin by reacting the product of the process as claimed in claim 8 with a dimer acid.

11. An epoxy resin or esterified epoxy resin prepared according to a process as claimed in any of claims 8 to 10.

## Claims (Claims for the following Contracting State(s): ES)

1. A process for preparing a fused epoxy resin having an epoxy equivalent weight of at least 500, by contacting
- a composition comprising a polyepoxide having an average of more than 1 vicinal epoxide group per molecule and a weight per epoxide less than 500 and an epoxy fusion catalyst, characterized in that the catalyst is of the formula 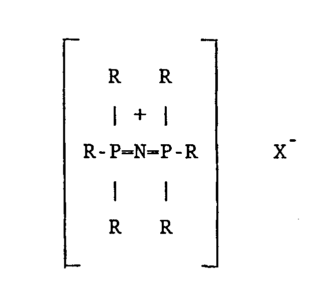 in which each R is selected independently from substituted or unsubstituted hydrocarbyl and X is a compatible anion with an acidic fusion compound selected from the group consisting of phenols, thiophenols, and carboxylic acids at a temperature in the range of 100 °C to 200 °C.

2. A process as claimed in claim 1, characterized in that the acidic fusion compound is 2,2,-bis(4-hydroxyphenyl)-propane.

3. A process as claimed in claims 1 or 2, characterized in that the polyepoxide is a diglycidyl ether of 2,2-bis-(4-hydroxyphenyl)-propane.

4. A process as claimed in any one of claims 1 to 3, characterized in that the amount of the catalyst employed is between 0.01 and 2% by weight based on the weight of the polyepoxide.

5. A process as claimed in any of claims 1 to 4, characterized in that the catalyst has at least one phenyl group per phosphorus atom.

6. A process as claimed in any of claims 1 to 5, characterized in that the catalyst has a halide as anion.

7. A process as claimed in any of claims 1 to 6, characterized in that the catalyst is bis(triphenylphosphine)iminium chloride.

8. A process as claimed in any of claims 1 to 7, characterized in that the composition further comprises from 0.03 to 1.0% by weight water, based on the weight of the polyepoxide.

9. A process for preparing an esterified epoxy resin by reacting the product of the process as claimed in any one of claims 1 to 8 with a dimer acid.

## Patentansprüche (Patentansprüche für folgende(n) Vertragsstaat(en): AT, BE, CH, DE, FR, GB, GR, IT, LI, LU, NL, SE)

1. Zusammensetzung mit einem Gehalt an einem Polyepoxid mit im Durchschnitt mehr als einer vicinalen Epoxidgruppe je Molekül und einem Gewicht je Epoxid von unter 500, und an einem Epoxyfusionskatalysator, dadurch gekennzeichnet, daß der Katalysator der Formel 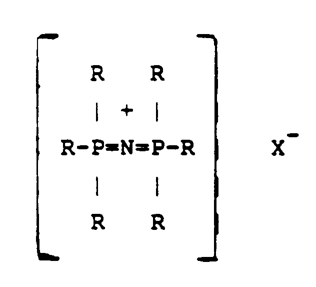 entspricht, worin jedes R unabhängig voneinander unter substituiertem oder unsubstituiertem Hydrocarbyl ausgewählt ist und X ein verträgliches Anion darstellt.

2. Zusammensetzung nach Anspruch 1, dadurch gekennzeichnet, daß das Polyepoxid ein 2,2-Bis(4-hydroxyphenyl)propan-diglycidylether ist.

3. Zusammensetzung nach Anspruch 1 oder 2, dadurch gekennzeichnet, daß die Menge des verwendeten Katalysators zwischen 0,01 und 2 Gew.-%, bezogen auf das Gewicht des Polyepoxids, beträgt.

4. Zusammensetzung nach einem der Ansprüche 1 bis 3, dadurch gekennzeichnet, daß der Katalysator wenigstens eine Phenylgruppe je Phosphoratom aufweist.

5. Zusammensetzung nach einem der Ansprüche 1 bis 4, dadurch gekennzeichnet, daß der Katalysator ein Halogenid als Anion enthält.

6. Zusammensetzung nach einem der Ansprüche 1 bis 5, dadurch gekennzeichnet, daß der Katalysator Bis(triphenylphosphin)iminiumchlorid ist.

7. Zusammensetzung nach einem der Ansprüche 1 bis 6, dadurch gekennzeichnet, daß die Zusammensetzung zusätzlich 0,03 bis 1,0 Gew.-% Wasser, bezogen auf das Gewicht des Polyepoxids, umfaßt.

8. Verfahren zur Herstellung eines verlängerten Epoxyharzes mit einem Epoxyäquivalentgewicht von wenigstens 500 durch Inkontaktbringen einer Zusammensetzung nach einem der Ansprüche 1 bis 7 mit einer sauren, aus der aus Phenolen, Thiophenolen und Carbonsäuren bestehenden Gruppe ausgewählten Fusionsverbindung bei einer Temperatur im Bereich von 100°C bis 200°C.

9. Verfahren nach Anspruch 8, dadurch gekennzeichnet, daß die saure Fusionsverbindung 2,2-Bis(4-hydroxyphenyl)propan ist.

10. Verfahren zur Herstellung eines veresterten Epoxyharzes durch Umsetzen des Produktes des Verfahrens nach Anspruch 8 mit einer Dimersäure.

11. Epoxyharz oder verestertes Epoxyharz, hergestellt nach einem Verfahren gemäß einem der Ansprüche 8 bis 10.

## Patentansprüche (Patentansprüche für folgende(n) Vertragsstaat(en): ES)

1. Verfahren zur Herstellung eines verlängerten Epoxyharzes mit einem Epoxyäquivalentgewicht von wenigstens 500 durch Inkontaktbringen einer ein Polyepoxid mit im Durchschnitt mehr als einer vicinalen Epoxidgruppe je Molekül und einem Gewicht je Epoxid von unter 500 und einen Epoxyfusionskatalysator umfassenden Zusammensetzung, die dadurch gekennzeichnet ist, daß der Katalysator der Formel 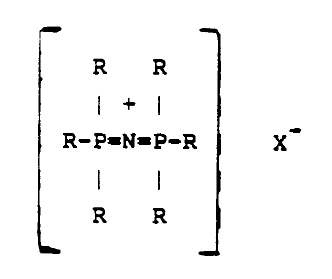 entspricht, worin jedes R unabhängig voneinander unter substituiertem oder unsubstituiertem Hydrocarbyl ausgewählt ist und X ein verträgliches Anion darstellt, mit einer sauren, aus der aus Phenolen, Thiophenolen und Carbonsäuren bestehenden Gruppe ausgewählten Fusionsverbindung bei einer Temperatur im Bereich von 100°C bis 200°C.

2. Verfahren nach Anspruch 1, dadurch gekennzeichnet, daß die saure Fusionsverbindung 2,2-Bis(4-hydroxyphenyl)propan ist.

3. Verfahren nach Anspruch 1 oder 2, dadurch gekennzeichnet, daß das Polyepoxid ein Diglycidylether von 2,2,Bis(4-hydroxyphenyl)propan ist.

4. Verfahren nach einem der Ansprüche 1 bis 3, dadurch gekennzeichnet, daß die Menge des verwendeten Katalysators zwischen 0,01 und 2 Gew.-%, bezogen auf das Gewicht des Polyepoxids, beträgt.

5. Verfahren nach einem der Ansprüche 1 bis 4, dadurch gekennzeichnet, daß der Katalysator wenigstens eine Phenylgruppe je Phosphoratom aufweist.

6. Verfahren nach einem der Ansprüche 1 bis 5, dadurch gekennzeichnet, daß der Katalysator ein Halogenid als Anion enthält.

7. Verfahren nach einem der Ansprüche 1 bis 6, dadurch gekennzeichnet, daß der Katalysator Bis(triphenylphosphin)iminiumchlorid ist.

8. Verfahren nach einem der Ansprüche 1 bis 7, dadurch gekennzeichnet, daß die Zusammensetzung zusätzlich 0,03 bis 1,0 Gew.-% Wasser, bezogen auf das Gewicht des Polyepoxids, umfaßt.

9. Verfahren zur Herstellung eines veresterten Epoxyharzes durch Umsetzen des Produktes des Verfahrens nach einem der Ansprüche 1 bis 8 mit einer Dimersäure.

## Revendications (Revendications pour l'(les) Etat(s) contractant(s) suivant(s): AT, BE, CH, DE, FR, GB, GR, IT, LI, LU, NL, SE)

1. Une composition comprenant un polyépoxyde ayant une moyenne de plus de 1 groupe époxy vicinal par molécule et un poids par groupe époxy inférieur à 500 et un catalyseur de polymérisation d'époxyde, caractérisée en ce que le catalyseur est de la formule 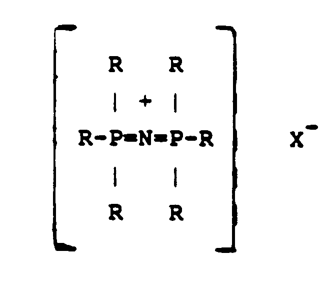 dans laquelle chaque R est choisi indépendamment parmi des groupes hydrocarbyle substitués ou non et X est un anion compatible.

2. La composition selon la revendication 1, caractérisée en ce que le polyépoxyde est un éther diglycidique de 2,2-bis(4-hydroxyphényl)propane.

3. La composition selon la revendication 1 ou 2, caractérisée en ce que la quantité du catalyseur utilisée est comprise entre 0,01 et 2 % en poids par rapport au poids du polyépoxyde.

4. La composition selon l'une quelconque des revendications 1 à 3, caractérisée en ce que le catalyseur a au moins un groupe phényle par atome de phosphore.

5. La composition selon l'une quelconque des revendications 1 à 4, caractérisée en ce que le catalyseur a un halogénure comme anion.

6. La composition selon l'une quelconque des revendications 1 à 5, caractérisée en ce que le catalyseur est du chlorure de bis(triphénylphosphine)iminium.

7. La composition selon l'une quelconque des revendications 1 à 6, caractérisée en ce que la composition comprend en outre de 0,03 à 1,0 % en poids d'eau, par rapport au poids du polyépoxyde.

8. Un procédé pour la préparation d'une résine époxy polymérisée ayant un poids équivalent d'époxyde d'au moins 500, par mise en contact d'une composition selon l'une quelconque des revendications 1 à 7 avec un composé de polymérisation acide choisi dans le groupe constitué par les phénols, les thiophénols et les acides carboxyliques à une température comprise entre 100°C et 200°C.

9. Un procédé selon la revendication 8, caractérisé en ce que le composé de fusion acide est le 2,2-bis-(4-hydroxyphényl)propane.

10. Un procédé pour la préparation d'une résine époxy estérifiée en faisant réagir le produit du procédé selon la revendication 8 avec un acide dimère.

11. Une résine époxy ou résine époxy estérifiée préparée par un procédé selon l'une quelconque des revendications 8 à 10.

## Revendications (Revendications pour l'(les) Etat(s) contractant(s) suivant(s): ES)

1. Procédé pour préparer une résine époxy polymérisée ayant un poids d'équivalent époxy d'au moins 500, consistant à mettre en contact
· une composition comprenant un polyépoxyde ayant une moyenne de plus de 1 groupe époxy vicinal par molécule et un poids par groupe époxy inférieur à 500 et un catalyseur de polymérisation d'époxyde, caractérisé en ce que le catalyseur est de la formule : 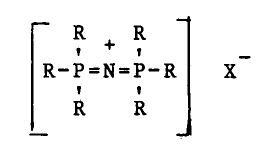 dans laquelle chaque R est choisi indépendamment parmi des groupes hydrocarbyle substitués ou non et X est un anion compatible avec un composé de polymérisation acide choisi dans le groupe formé par les phénols, thiophénols, et acides carboxyliques à une température comprise entre 100 et 200°C.

2. Un procédé selon la revendication 1, caractérisé en ce que le composé de polymérisation acide est le 2,2-bis-(4-hydroxyphényl)-propane.

3. Un procédé selon l'une des revendications 1 ou 2, caractérisé en ce que le polyépoxyde est un éther diglycidyque de 2,2-bis-(4-hydroxyphényl)-propane.

4. Un procédé selon l'une des revendications 1 à 3, caractérisé en ce que la quantité de catalyseur est comprise entre 0,01 et 2 % en poids par rapport au poids du polyépoxyde.

5. Un procédé selon l'une quelconque des revendications 1 à 4, caractérisé en ce que le catalyseur a au moins un groupe phényle par atome de phosphore.

6. Un procédé selon l'une quelconque des revendications 1 à 5, caractérisé en ce que le catalyseur a un halogénure comme anion.

7. Un procédé selon l'une des revendications 1 à 6, caractérisé en ce que le catalyseur est le chlorure de bis-(triphénylphosphine)-iminium.

8. Un procédé selon l'une des revendications 1 à 7, caractérisé en ce que la composition comprend en outre de 0,03 à 1,0 % en poids d'eau par rapport au poids du polyépoxyde.

9. Un procédé pour préparer une résine époxy estérifiée en faisant réagir le produit du procédé selon l'une des revendications 1 à 8 avec un acide dimère.
